# FASCICULE DE BREVET EUROPEEN

(11) **EP 4 409 190 B1**
(45) Date de publication et mention de la délivrance du brevet: **20.08.2025**
(21) Numéro de dépôt: 22789965.5
(22) Date de dépôt: 27.09.2022
(51) Int. Cl.: F16L 57/00

(54) **PROTECTEUR D'UNE EXTRÉMITÉ FILETÉE D'UN COMPOSANT TUBULAIRE**
SCHUTZVORRICHTUNG FÜR EIN GEWINDEENDE EINER ROHRFÖRMIGEN KOMPONENTE
PROTECTOR FOR A THREADED END OF A TUBULAR COMPONENT

(30) Priorité: 28.09.2021 FR 2110233
(43) Date de publication de la demande: 07.08.2024
(73) Titulaire: Vallourec Oil and Gas France, 59620 Aulnoye-Aymeries (FR)
(72) Inventeur: GALLOIS, Yann, 92190 Meudon (FR); DAVID, Didier, 92190 Meudon (FR)
(74) Mandataire: Mbacke, Mactar
(86) Numéro de dépôt international: PCT/FR2022/051813
(87) Numéro de publication internationale: WO 2023/052720

(56) Documents cités:
- DE-A1- 3 229 531
- US-A- 1 893 927
- US-A- 2 082 286
- US-A1- 2007 113 910

## Description

### Domaine technique

L'invention concerne des composants filetés tubulaires et plus précisément des protecteurs pour protéger l'extrémité de ces composants, notamment les tubes de forage ou d'exploitation de puits de pétrole ou gaz.

On entend ici par "composant tubulaire" tout élément ou accessoire utilisé pour forer ou exploiter un puits et comprenant au moins une extrémité filetée, encore appelée connexion ou connecteur, et destiné à être assemblé par un filetage à un autre composant tubulaire pour constituer avec cet autre composant un joint fileté tubulaire. Le composant tubulaire peut être par exemple un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants tubulaires sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 émise par l'International Standardisation Organisation (ISO), régit les tubes utilisés comme casing ou tubing, et la spécification API 5B définit des filetages standards pour ces tubes.

La spécification 7 de l'API définit des connexions filetées à épaulement pour tiges de forage rotatif.

Les connexions filetées comprennent le plus souvent un ou plusieurs filetages dont les filets sont sensiblement trapézoïdaux et comprennent un flanc d'engagement (dit « stabbing ») du côté des filets dirigés vers l'extrémité libre de l'élément fileté considéré, un flanc porteur (dit « loading ») du côté opposé des filets d'engagement, un sommet de filet de largeur non nulle et un fond de filet de largeur également non nulle, les flancs porteurs et les flancs d'engagement étant d'orientation sensiblement perpendiculaire à l'axe de l'élément fileté (par exemple, le filet API Buttress présente selon la norme API une inclinaison de +3° pour les flancs porteurs, et une inclinaison de +10° pour les flancs d'engagement).

Il existe également des filets triangulaires ou ronds présentant également des flancs d'engagement et des flancs porteurs dont les sommets et fonds de filets sont de largeur sensiblement nulle, mais qui sont aujourd'hui très peu utilisés car ils présentent un fort risque de désengrènement (« jump-out »).

Les composants tubulaires précités peuvent comporter une extrémité mâle filetée qui est destinée à être vissée à une extrémité femelle filetée d'un autre composant tubulaire de forage ou d'exploitation. Il est donc indispensable que leurs extrémités mâle et femelles soient le moins possible endommagées, polluées et détériorées entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Par ailleurs, les extrémités des composants précités étaient généralement enduites juste avant leur assemblage d'une graisse à propriété anti-grippante.

Il est de plus en plus courant de remplacer cette graisse par une combinaison de traitements de surface et de revêtements apposés en fines couches sur les connexions, c'est-à-dire sur le filetage, sur la portée et/ou sur la butée.

Les protecteurs sont des dispositifs dont la fonction est de protéger les surfaces fonctionnelles des connexions mâles ou des connexions femelles. Ces surfaces fonctionnelles peuvent être un ou plusieurs filetage(s), une ou plusieurs portée(s), une ou plusieurs butée(s). Un protecteur est de forme générale sensiblement cylindrique et comprend généralement un corps, un moyen d'arrimage et éventuellement un amortisseur de chocs mécaniques appelé pare-choc situé à l'extrémité opposée à l'extrémité libre du protecteur. La solution généralement adaptée pour arrimer un protecteur sur une connexion est de le visser sur le filetage de la connexion. Cette solution permet un geste de montage simple associé à un positionnement précis. Le protecteur comporte donc un filetage apte à être vissé sur le filetage de la connexion. Le filetage est le plus souvent de même type et de même pas que celui de la connexion. Un filetage de protecteur comprend donc des filets avec des flancs d'engagement du côté des filets orienté vers l'extrémité libre du protecteur et destinés à entrer en contact avec des flancs d'engagement des filets d'une connexion lors du vissage du protecteur sur la connexion, des flancs porteurs, des sommets et fonds de filets et au moins une butée.

Un protecteur a pour but principal de protéger la connexion d'un composant tubulaire (destiné au forage ou à l'exploitation de puits d'hydrocarbures ou similaires) contre divers types d'agression extérieure : les endommagements mécaniques tels que des chocs mécaniques, les pollutions (chimiques et matérielles) telles que des poussières se déposant sur les surfaces fonctionnelles et la corrosion des matériaux entre le moment où le composant tubulaire sort de sa chaîne de fabrication et celui où il est utilisé (avec plusieurs montages-démontages possibles du dispositif de protection).

Cependant, la demanderesse s'est aperçue que lors du transport ou de la manutention de tubes sur lesquels les protecteurs connus sont montés, les surfaces fonctionnelles des connexions sont insuffisamment protégées contre les dégradations, notamment les chocs mécaniques. En outre, il arrive que des protecteurs connus se dévissent partiellement ou totalement ou bien que des surfaces fonctionnelles soient endommagées malgré la présence du protecteur connu monté sur la connexion.

On connait de l'art antérieur les documents suivants :
DE 3229531 A1 qui divulgue un protecteur pour protéger une extrémité terminale d'un tube dans le domaine pétrolier. Le protecteur de D1 comprend un surmoulage en plastique dans un objectif d'assurer l'étanchéité d'un protecteur par rapport à un tube. Ce surmoulage en plastique doit rester fixé dans le protecteur sans aucune possibilité de mobilité ou de déplacement sinon l'étanchéité n'est plus assurée.

US 2082286 A divulgue qui un protecteur comprenant deux pièces métalliques soudées ensemble. La première partie est appelée "Ring" et ne comprends aucun filetage, et une seconde partie appelée "cup-shape member" destinée à loger le filetage d'un tube qui ne comprends aucun filetage également.

US2007/113910 A1 qui divulgue un protecteur de type "ouvert" c'est-à-dire comprenant une ouverture au niveau de sa partie supérieure, c'est-à-dire celle supposée recouvrir la partie ouverte et libre d'un tube, et ladite ouverture pouvant être refermée par un plug.

US 1893927 A qui divulgue des raccords filetés pour des éléments filetés tubulaires. Ces raccords filetées sont choisis en fonction de filetage du tube que l'utilisateur souhaite faire correspondre.

Ainsi, il existe un réel besoin de développer un protecteur permettant de résoudre les problèmes susmentionnés.

### Résumé

Selon l'invention, un protecteur pour protéger une extrémité filetée mâle ou femelle d'un composant tubulaire est fourni selon la revendication 1.

Une idée à la base de l'invention est un protecteur permettant de protéger une extrémité filetée, notamment durant le transport et le stockage de celle-ci.

Une autre idée à la base de l'invention est un protecteur qui, une fois monté sur une extrémité filetée ne se dévisse pas de manière non intentionnelle.

Une autre idée à la base de l'invention est un protecteur réutilisable et adaptable, c'est-à-dire pouvant être modifié afin de s'adapter à différents types de connexions.

Une autre idée à la base de l'invention est un protecteur qui facilite le nettoyage de la graisse au fond du protecteur, notamment sur les parties lisses du protecteur.

Une autre idée à la base de l'invention est de réaliser un protecteur fiable et économique par la possibilité de remplacer le filetage du protecteur uniquement au lieu du protecteur dans sa totalité.

Selon un mode de réalisation, l'invention fournit un protecteur pour protéger une extrémité filetée mâle ou femelle d'un composant tubulaire pour le forage, l'exploitation des puits hydrocarbures, le transport de pétrole et de gaz, le transport ou le stockage d'hydrogène, la captation carbone ou la géothermie, l'extrémité mâle ou femelle étant munie d'au moins un filetage externe ou interne, le protecteur comprenant :
- un corps principal destiné à recevoir l'extrémité filetée mâle ou femelle, le corps principal comprenant une paroi latérale périphérique s'étendant selon une direction axiale, dans lequel un logement est aménagé dans une épaisseur de la paroi latérale périphérique, ledit logement s'étendant autour de la paroi latérale périphérique,
- au moins une bague filetée logée dans ledit logement de manière amovible, la bague filetée présentant un filetage destinée à se visser sur le filetage externe ou interne de l'extrémité mâle ou femelle.

Grâce à ces caractéristiques, le protecteur peut être inséré sur une extrémité filetée mâle ou femelle afin de la protéger. En outre, une partie du protecteur est réutilisable. En effet, la bague filetée initialement logée dans le logement du protecteur peut être remplacée par une autre bague filetée, ce qui confère au protecteur une adaptabilité lui permettant d'être réutilisé pour une même extrémité filetée mâle ou femelle ou une extrémité filetée comprenant un filetage différent.

Grace à ces caractéristiques, la bague filetée et le logement contribuent à créer de l'interférence filetage et ainsi d'ajouter plus de valeur de couple au protecteur.

Un protecteur selon l'invention permet un montage et un démontage sur chantier rapides et fiables du protecteur sur une connexion de composant tubulaire et permet une inspection facile de l'état des filetages avant utilisation ou entre deux utilisations successives du composant.

Un protecteur selon l'invention permet d'empêcher le dévissage prématuré ou non désiré dudit protecteur. En effet, un effort axial associé à une rotation doit être fourni pour permettre le montage initial du protecteur sur un élément tubulaire. Lorsque le protecteur est en position vissé, la bague est en position vissée sur l'élément fileté tubulaire. Le corps principal peut être amené à se déplacer autour de l'élément fileté tubulaire sans que le protecteur ne se dissocie de la connexion à protéger. Seule l'application d'une rotation inverse et éventuellement d'un effort axial permettra le démontage du protecteur. Une transmission d'effort entre la bague filetée et le corps du protecteur peut se faire de différentes manières, par exemple par friction ou par engrenage. Une mise en contact par friction peut se faire au niveau d'une ou deux surfaces axiales du logement contre une ou deux surfaces axiales de la bague. Un tel contact par friction ou engrenage permet à la bague d'être dévissée de la connexion lorsque l'on dévisse le corps principal du protecteur.

Un composant tubulaire pour le forage et l'exploitation de puits de pétrole ou gaz est généralement composé d'un corps et de deux connexions de part et d'autre du corps pour connecter le composant tubulaire à d'autres composants tubulaires. Le composant peut être réalisé en acier, en acier inoxydable, et / ou en aluminium.

En particulier, un tube comprend un corps et une connexion ou une extrémité filetée à chaque extrémité, de part et d'autre de ce corps. Une connexion peut être une portion d'extrémité du corps munie de surfaces usinées en vue de former un joint avec une connexion correspondante d'un autre corps tubulaire. Alternativement, une connexion peut être une portion usinée d'un manchon rapporté par soudage ou vissage sur un corps de composant tubulaire. Alternativement encore, une connexion peut être un manchon soudé sur un corps de composant tubulaire.

On entend par « connexion mâle » ou « extrémité filetée mâle » la portion d'un composant munie de surfaces usinées et/ou rectifiées en vue de former un joint avec une connexion femelle correspondante. Une connexion mâle a généralement un ou plusieurs filetage(s) situé(s) sur une paroi latérale extérieure de l'extrémité du composant et une connexion femelle correspondante a un ou plusieurs filetage(s) correspondants sur une paroi latérale intérieure de l'extrémité du composant.

Un composant peut être muni de deux connexions mâles, une connexion mâle et une connexion femelle, ou deux connexions femelles.

Selon des modes de réalisation, un tel protecteur peut comporter une ou plusieurs des caractéristiques suivantes.

Selon un mode de réalisation, le corps principal présente une paroi de fond qui est située au niveau d'une extrémité axiale de la paroi latérale périphérique, la paroi latérale périphérique s'étendant tout autour de la paroi de fond.

Selon un mode de réalisation, la paroi de fond présente une ouverture traversante.

Selon un mode de réalisation, la bague filetée fait tout le tour du logement.

Selon l'invention, la bague filetée est interrompue pour pouvoir être déformée lors d'une insertion dans le logement ou d'un retrait dudit logement.

Selon un mode de réalisation, la bague filetée présente une zone d'épaisseur affaiblie afin d'accroitre la capacité de déformation élastique de ladite bague filetée.

Grâce à ces caractéristiques, la bague filetée est déformable élastiquement lui permettant d'être facilement montée ou démontée du logement du corps principal.

Selon un mode de réalisation, la bague filetée présente un filetage à droite, c'est-à-dire que le sens du serrage est de la gauche vers la droite.

Selon un mode de réalisation, la bague filetée présente un filetage à gauche, c'est-à-dire que le sens du serrage est de la droite vers la gauche.

Selon un mode de réalisation, une forme de la bague filetée est choisie parmi : cylindrique, cylindrique étagée, hélicoïdale et tronconique.

Selon un mode de réalisation, une forme du logement est choisie parmi : cylindrique, cylindrique étagée, hélicoïdale et tronconique.

Selon un mode de réalisation, la forme de la bague filetée et la forme du logement sont correspondantes.

Selon un mode de réalisation, une forme de la bague filetée et une forme correspondante du logement sont choisies parmi : une forme cylindrique, une forme cylindrique étagée, une forme hélicoïdale et une forme tronconique.

Selon un mode de réalisation, la bague filetée comprend une surface non filetée qui épouse le logement afin d'accroitre la surface de contact entre la bague filetée et le logement. Par exemple la bague filetée comprend des courbures et/ou des butées afin de s'adapter au logement.

Selon un mode de réalisation, le logement présente au moins un rebord destiné à arrêter la bague filetée dans la direction axiale.

Ainsi, une fois que la bague filetée est logée dans le logement, la bague filetée ne se délogera pas de manière non intentionnelle, la bague filetée est maintenue dans le logement.

Selon un mode de réalisation, le rebord présente une encoche destinée à faciliter un démontage de la bague filetée du corps principal.

Grâce à ces caractéristiques, la bague filetée est facilement délogée et retirée du logement du corps principal, via par exemple une languette métallique plate ou un tournevis à bout plat.

Selon un mode de réalisation, le logement présente un deuxième rebord destiné à arrêter la bague filetée dans la direction axiale.

Selon un mode de réalisation, le logement est ménagé dans une épaisseur de la paroi latérale périphérique.

Selon un mode de réalisation, le logement présente une profondeur comprise entre 0,2 mm et 20 mm.

Selon un mode de réalisation, le logement présente une longueur comprise entre 2 mm et 300 mm.

Selon un mode de réalisation, la bague filetée présente un diamètre compris entre 50 mm et 700 mm.

Selon un mode de réalisation, le logement est ménagé dans toute l'épaisseur de la paroi latérale périphérique, c'est-à-dire que le logement est traversant dans la direction de l'épaisseur de la paroi périphérique.

Selon un mode de réalisation, le logement s'étend sur une portion du tour de la paroi latérale périphérique. Selon un mode de réalisation, le logement s'étend au moins sur les ¾ du tour de la paroi latérale périphérique.

Selon un mode de réalisation, le logement s'étend tout le tour de la paroi latérale périphérique.

Selon un mode de réalisation, un moyen de blocage bloque un mouvement de rotation de la bague fileté par rapport au corps principal pour pouvoir visser ou dévisser la bague filetée en exerçant un couple de rotation sur le corps principal.

Selon un mode de réalisation, le moyen de blocage comporte un système nervure-rainure permettant de solidariser en rotation une surface extérieure ou intérieure de la bague filetée avec la surface intérieure ou extérieure de la paroi latérale périphérique.

Selon un mode de réalisation, la bague filetée interrompue comprend une zone d'interruption, ladite zone d'interruption formant ladite rainure, et dans lequel la zone d'interruption coopère avec une nervure formée sur la surface intérieure ou extérieure de la paroi latérale périphérique.

Grâce à ces caractéristiques, la bague filetée interrompue est déformable et peut être facilement montée ou démontée du logement du corps principal. En outre, système nervure-rainure permet de facilement visser ou dévisser la bague filetée.

Selon un mode de réalisation, la zone d'interruption est en forme d'escalier.

Selon un mode de réalisation, le système nervure-rainure comprend une rainure formée dans la surface non filetée de la bague filetée et une nervure située dans le logement et destinée à être logée dans ladite rainure.

Ainsi, la bague filetée peut s'étendre dans le logement et faire tout le tour de la paroi latérale périphérique.

Selon un mode de réalisation, le moyen de blocage est choisi parmi :
- une portion tronconique formée par une surface non filetée de la bague filetée et/ou par une surface intérieure ou extérieure de la paroi latérale périphérique, la portion tronconique permettant de solidariser par friction la surface non filetée de la bague filetée avec la surface intérieure ou la surface extérieure de la paroi latérale périphérique en réponse à une force de poussée axiale exercée sur la bague filetée en direction de la paroi de fond,
- une épaisseur de la bague filetée supérieure à une profondeur du logement afin de solidariser par friction la surface non filetée de la bague filetée avec la surface intérieure ou extérieure de la paroi latérale périphérique en vissant le filetage externe ou interne de l'extrémité filetée mâle ou femelle du composant tubulaire à la bague filetée, l'extrémité filetée mâle ou femelle du composant tubulaire étant apte à provoquer une dilatation radiale de la bague filetée en réponse audit vissage.

Selon un mode de réalisation, le corps principal présente une certaine rigidité tout en étant capable d'absorber au moins partiellement les chocs.

Selon un mode de réalisation, le corps principal ou la bague sont réalisés en matériau polymère, par exemple par injection d'un matériau thermoplastique dans un moule adapté.

Selon un mode de réalisation, le corps principal ou la bague sont réalisés en matériau thermoplastique choisi parmi : les mélanges à base de polycarbonate comme le polycarbonate-polyester (PC-PBT ou PC-PET) et les polyéthylènes (PE) à haute (PE-HD) ou ultra haute densité (PE-UHD).

Selon un autre mode de réalisation, le corps principal ou la bague est réalisé par fabrication additive en matériau choisi parmi : les polyamides, les élastomères, les polymères chargés, matériaux métalliques ou en combinaison.

Dans les cas où l'on veut obéir à la spécification API 5CT qui prévoit dans son annexe I des exigences pour les dispositifs de protection de filetages, notamment des valeurs minimales de résistance aux chocs axiaux et de biais (à 45°) pour trois températures (-46, +21 et +66°C), on peut par exemple plus particulièrement choisir un PE-HD produit par la société DOW et vendu sous le nom DMBA-8904-NT7 ou produit par la société BASELL et vendu sous le nom LUPOLEN 4261 AG UV 6005, un PE-UHD produit par la société TICONA et vendu sous le nom GUR 5113, ou un PC-PBT produit par la société BAYER et vendu sous le nom MAKROBLEND S7916.

Selon un mode de réalisation, le corps principal est partiellement alvéolé, notamment dans ses portions épaisses, afin de mieux absorber les coups.

Selon un mode de réalisation, le protecteur comprend une pluralité de logements disposés de manière étagée dans la direction axiale du corps principal et une pluralité de bagues filetées respectivement disposées de manière amovible dans lesdits logements.

Selon un mode de réalisation, des filetages de la pluralité de bagues filetées sont différents les uns des autres.

Selon un mode de réalisation, un joint inférieur est situé sur la paroi de fond et est destiné à établir un contact étanche avec l'extrémité filetée mâle ou femelle du composant tubulaire.

Ainsi, une zone d'étanchéité est formée au niveau de la zone de contact avec l'extrémité filetée mâle ou femelle.

Selon un mode de réalisation, le joint inférieur est attaché de manière amovible au corps principal.

Ainsi, le joint inférieur est aisément remplaçable sans changer la totalité du protecteur.

Selon un mode de réalisation, le joint inférieur est en forme de tronc de cône divergent en direction de la paroi de fond.

Grâce à ces caractéristiques l'étanchéité formée au niveau de la zone de contact avec l'extrémité filetée mâle ou femelle est renforcée.

Selon un mode de réalisation, la paroi latérale périphérique présente une extrémité axiale distante de la paroi de fond, un joint supérieur étant situé sur l'extrémité axiale et destiné à établir un contact étanche avec l'extrémité filetée mâle ou femelle du composant tubulaire.

Selon un mode de réalisation, le joint supérieur est attaché de manière amovible au corps principal.

Ainsi, le joint supérieur peut-être aisément remplacé sans changer la totalité du protecteur.

Selon un mode de réalisation, le protecteur comporte en outre un support de données permettant de mémoriser, stocker, ou enregistrer des données, en utilisant une technologie « Radio Frequency Idendification » (RFID).

Le support de données comprend par exemple des informations concernant : le protecteur, le composant tubulaire, la concordance entre le protecteur et l'extrémité filetée mâle ou femelle du composant tubulaire, la marchandise transportée et/ou le transporteur de la marchandise.

Selon un mode de réalisation, le support de données est situé dans le corps principal, le logement, la bague filetée, le joint inférieur ou le joint supérieur.

Selon un mode de réalisation, un protecteur selon l'invention, dans lequel la bague filetée (8, 108) et/ou le corps principal (2, 102) est fabriqué par fabrication additive, par moulage ou par usinage dans un ou plusieurs matériaux.

Selon un mode de réalisation, la fabrication est effectuée dans un même matériau ou dans plusieurs matériaux différents.

Selon un mode de réalisation, la fabrication additive utilisée est effectuée par rechargement, par fusion par faisceau d'électrons, par fusion laser sur lit de poudre métallique ou « selective laser melting », par multi jet fusion, par dépôt de fil fondu, par Polyjet, par coulée sous vide, par frittage sélectif par laser, par stéréolithographie dans un bain de résine, par dépôt métallique direct ou « Direct Energy Deposition », par dépôt par projection de liant ou dépôt par projection laser ou par dépôt par fabrication additive arc-fil. Chacun de ces procédés de réalisations permet l'imprégnation avec un autre matériau qui peut être hydrophobe, lubrifiant, conducteur, isolant, fluorescent...

L'invention fournit aussi un ensemble comportant un composant tubulaire présentant une extrémité filetée mâle ou femelle et un protecteur tel que décrit précédemment fixé par vissage à l'extrémité filetée mâle ou femelle.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 illustre une vue éclatée en coupe d'une extrémité filetée mâle d'un composant tubulaire et d'un protecteur selon un mode de réalisation.
[fig.2] La figure 2 illustre une vue éclatée en perspective d'un protecteur selon un mode de réalisation.
[fig.3] La figure 3 illustre une vue en perspective d'une bague filetée selon un mode de réalisation.
[fig.4] La figure 4 illustre une vue en perspective d'un corps principal apte à loger la bague filetée illustrée sur la figure 3.
[fig.5] La figure 5 illustre une vue en perspective d'un protecteur selon un mode de réalisation.
[fig.6] La figure 6 illustre une vue du dessus du joint inférieur du protecteur illustré sur la figure 5.
[fig.7] La figure 7 illustre une vue en perspective d'une bague filetée interrompue selon un mode de réalisation.
[fig.8] La figure 8 illustre une vue en perspective d'un corps de protecteur convenant pour recevoir la bague filetée de la Fig. 7, avant insertion de la bague filetée.
[fig.9] La figure 9 est une vue analogue à la figure 8 durant l'insertion de la bague filetée.
[fig.10] La figure 10 est une vue analogue aux figures 8 et 9 après l'insertion de la bague filetée dans le logement.
[fig.11] La figure 11 illustre une vue en coupe d'un protecteur comprenant une paroi latérale périphérique tronconique.
[fig. 12] La figure 12 illustre une vue en coupe d'un protecteur comprenant une bague filetée au cours du vissage d'un composant tubulaire.
[fig. 13] La figure 13 illustre une vue éclatée en perspective d'un protecteur dans lequel la bague filetée et le logement présentent des formes hélicoïdales.
[fig. 14] La figure 14 illustre une vue en perspective d'une bague filetée du protecteur de la figure 13.
[fig.15] La figure 15 est une vue en coupe d'un protecteur pour une extrémité filetée femelle d'un composant tubulaire selon un mode de réalisation.
[fig.16] La figure 16 illustre une vue en coupe du protecteur illustré sur la figure 16 à l'état assemblé sur une extrémité filetée femelle d'un composant tubulaire.
[fig.17] La figure 17 illustre une vue éclatée en perspective du protecteur illustré sur les figures 16 et 17 et de l'extrémité filetée femelle d'un composant tubulaire.

### Description des modes de réalisation

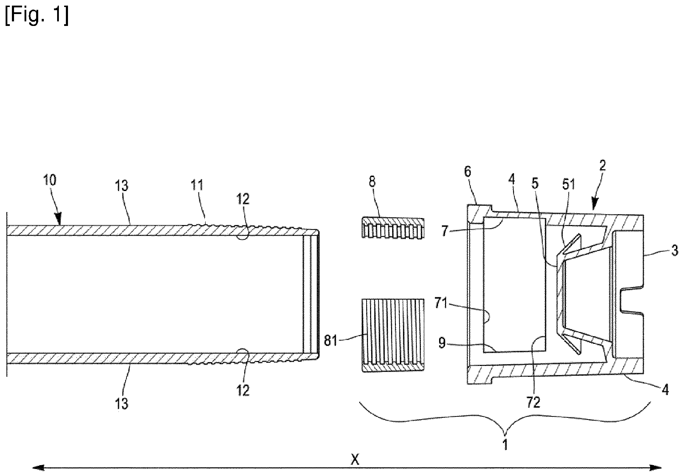

Les figures 1 à 14 représentent des protecteurs pour protéger un composant tubulaire présentant une extrémité filetée mâle, c'est-à-dire présentant un filetage externe.

La figure 1 illustre un composant tubulaire 10 et un protecteur 1 qui lui correspond. Le composant tubulaire 10 est de forme générale cylindrique et présente une extrémité filetée mâle 11, c'est-à-dire présentant un filetage externe.

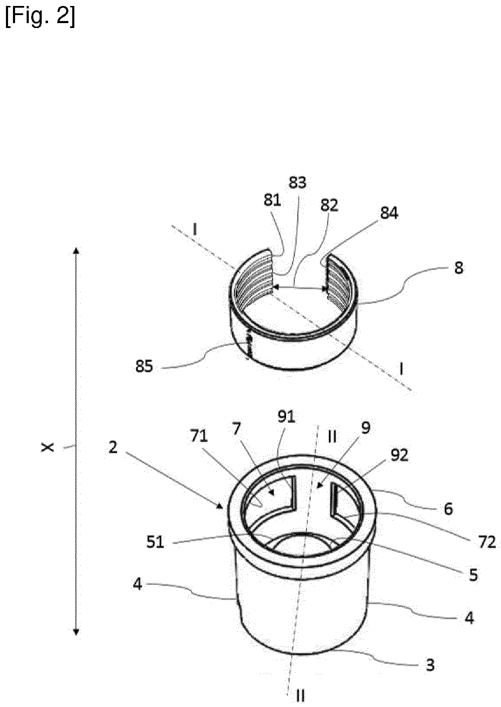

Le protecteur 1 comprend un corps principal 2 destiné à recevoir l'extrémité fileté mâle 11. Le corps principal 2 de la figure 1 est une vue en coupe selon l'axe II-II représenté sur la figure 2. Le corps principal 2 est creux et comporte une paroi de fond 3 et une paroi latérale périphérique 4 s'étendant depuis la paroi de fond 3 dans une direction axiale X tout autour de la paroi de fond 3.

Un joint inférieur 5 formé d'un seul tenant avec le corps principal 2 est situé sur la paroi de fond 3. Le joint inférieur 5 comprend une zone circulaire 51 qui est destinée à établir un contact étanche avec une surface interne 12 de la portion d'extrémité filetée mâle 11.

En outre, un joint supérieur 6 formé d'un seul tenant avec le corps principal est situé au niveau d'une extrémité supérieure du corps principal 2. Le joint supérieur 6 fait tout le tour de l'extrémité supérieur du corps principal 2 et est destiné à établir un contact étanche avec une surface externe 13 du composant tubulaire 10.

Le corps principal 2 comporte en outre un logement 7 qui est aménagé dans l'épaisseur de la paroi latérale périphérique 4 sans traverser la paroi latérale périphérique 4. Le logement 7 est situé entre le joint inférieur 5, le joint supérieur 6 et s'étend autour de la paroi latérale périphérique 4, sur un secteur angulaire d'environ à 320°. Le logement 7 est destiné à loger une bague filetée 8. Le logement 7 présente un rebord supérieur 71 destiné à arrêter la bague filetée 8 dans la direction axiale X, en direction du joint supérieur 6 et un rebord inférieur 72 destiné à arrêter la bague filetée 8 dans la direction axiale X, en direction du fond 3.

Sur la figure 1, la bague filetée 8 est une vue en coupe selon l'axe I-I représentée sur la figure 2. La bague fileté 8 présente un filetage 81 sur une surface intérieure. Le filetage 81 correspond au filetage de l'extrémité fileté mâle 11 afin de permettre le vissage de l'un sur l'autre. La bague filetée 8 est interrompue afin de former une zone d'interruption 82 pour pouvoir être déformée lors d'une insertion ou d'un retrait dans le logement 7. La zone d'interruption 82 présente un premier bord latéral 83 parallèle à un deuxième bord latéral 84 pouvant coopérer respectivement avec un premier bord latéral 91 et un deuxième bord latéral 92 d'une nervure 9 présente sur la surface interne de la paroi latérale périphérique 4 pour arrêter la bague filetée 8 en rotation. La nervure 9 est ainsi destinée à bloquer tout mouvement de rotation de la bague fileté 8 par rapport au corps principal afin de permettre le vissage ou dévissage de la bague filetée 8 sur l'extrémité filetée mâle 11 du composant tubulaire 10.

Selon une variante indiquée sur la figure 2, la bague filetée comprend en outre une zone d'épaisseur affaiblie 85 permettant d'accroitre la capacité de déformation élastique de la bague filetée 8 tout en diminuant le risque de cassure de la bague filetée 8 durant l'insertion dans le logement 8.

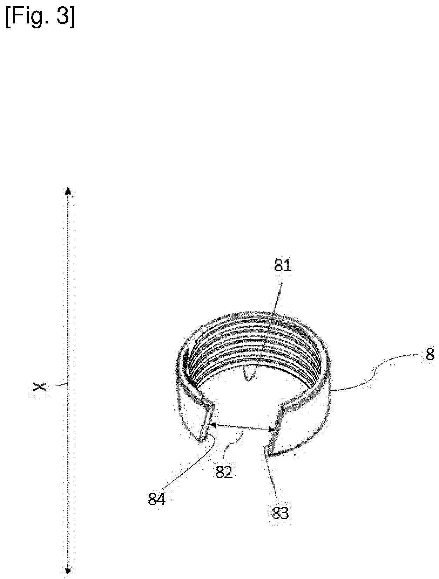

La figure 3 présente une bague filetée 8 selon un autre mode de réalisation. Dans ce mode de réalisation, le premier bord latéral 83 et le deuxième bord latéral 82 de la bague filetée 8 sont parallèles entre eux et sont en biais au regard de la direction axiale X.

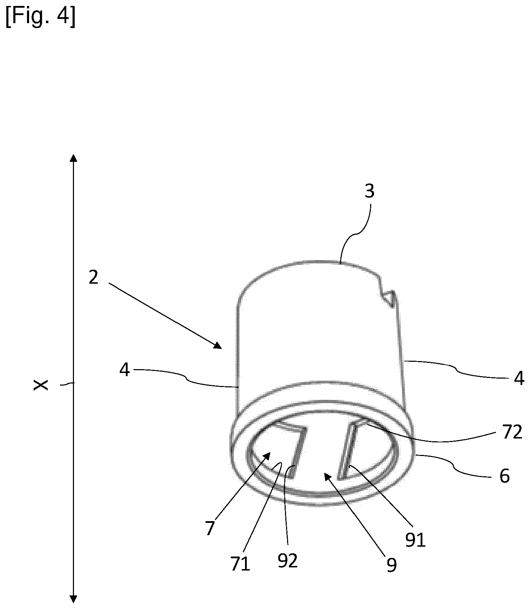

La figure 4 représente un corps principal 2 adapté pour recevoir la bague fileté 8 illustrée sur la figure 3. La nervure 9 présentent de manière complémentaire à la zone d'interruption 82 présentée sur la figure 3 un premier bord latéral 91 et un deuxième bord latéral 92 parallèles entre eux et en biais au regard de la direction axiale X. Le premier bord latéral 91 et le deuxième bord latéral 92 coopèrent respectivement avec le premier bord latéral 83 et avec le deuxième bord latéral 82 afin de mettre le logement de la bague filetée 8 dans le logement 7 et de bloquer le mouvement de rotation de la bague fileté 8 par rapport au corps principal 2.

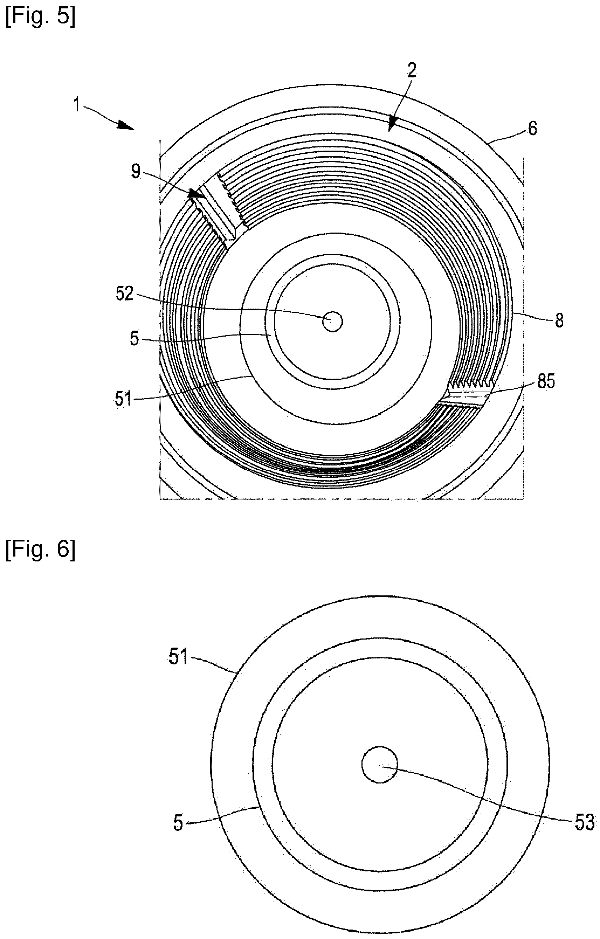

La figure 5 illustre un protecteur 1 comprenant un corps principal 2 et une bague filetée 8 logée dans un logement. De manière similaire aux figures précédentes, le protecteur 1 comprend un joint inférieur 5 et un joint supérieur 6 entre lesquels le logement est situé. Le logement pour recevoir la bague filetée 8 s'étend autour de la paroi latérale périphérique 4, sur un secteur angulaire d'environ 350°. Le joint inférieur 5 est attaché de manière amovible au corps principal via une fixation 52 et présente une forme de tronc de cône divergent en direction de la paroi de fond afin de permettre un contact étanche avec une surface interne de la portion d'extrémité filetée mâle. Le joint inférieur 5 démonté du protecteur 1 est illustré sur la figure 6. Le joint inférieur 5 illustré sur la figure 6 présente un orifice 53 permettant d'intégrer la fixation 52 afin de fixer le joint intérieur 5 sur la paroi de fond 3 du corps principal 2.

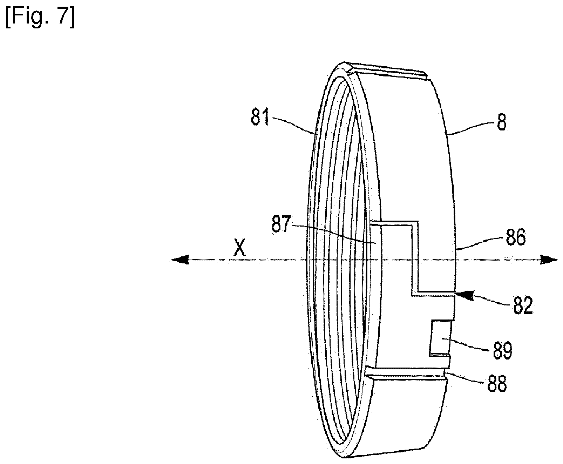

La figure 7 illustre une bague filetée 8 selon un autre mode de réalisation. La bague filetée 8 présente une forme générale d'un cylindre de révolution autour de la direction axiale X. La bague filetée 8 présente en outre une zone d'interruption 82 en forme d'escalier. Cette forme d'interruption 82 est particulièrement avantageuse en ce qu'elle permet d'obtenir une bague filetée 8 présentant un filetage 81 sur tout le tour interne de la bague filetée 8. Un protecteur comprenant cette bague filetée 8 pourra donc être vissé et maintenu fermement sur le filetage de l'extrémité filetée correspondante. En outre, cette forme d'interruption en escalier forme ainsi une première portion 86 de bague filetée et une deuxième portion 87 de bague filetée en vis-à-vis qui reprendront les efforts dirigés selon la direction axiale X. La bague filetée 8 est donc davantage résistante à ce type de contrainte.

La bague filetée 8 comprend en outre une rainure 88 et une encoche 89 située à proximité de la rainure 88 sur une surface extérieure, non filetée, de la bague filetée 8. La rainure 88 est destinée à coopérer avec une nervure (non représentée) située sur une surface intérieure de la paroi latérale périphérique afin de solidariser en rotation la surface non filetée de la bague filetée 8 avec la surface intérieure de la paroi latérale périphérique.

L'encoche 89 permet d'insérer l'extrémité d'un outil, par exemple tournevis, pour faciliter le démontage de la bague filetée 8.

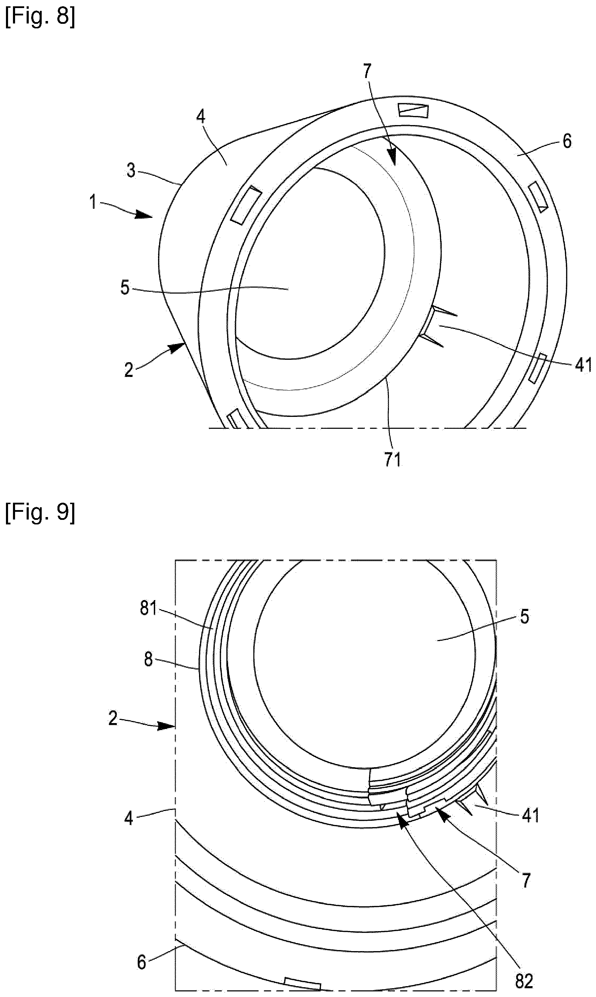

La figure 8 illustre le corps principal 2 d'un protecteur 1 dans lequel la bague filetée 8 de la figure 7 est utilisée. Dans ce mode de réalisation, le logement 7 est creusé dans l'épaisseur de la surface interne de la paroi latérale périphérique 4 et s'étend tout autour de la paroi latérale périphérique 4, c'est-à-dire sur un secteur angulaire de 360°. Le rebord supérieur 71 présente une encoche 41 destinée à être alignée à l'encoche 89 pour faciliter le démontage de la bague filetée 8 du logement 7 du corps principal 2.

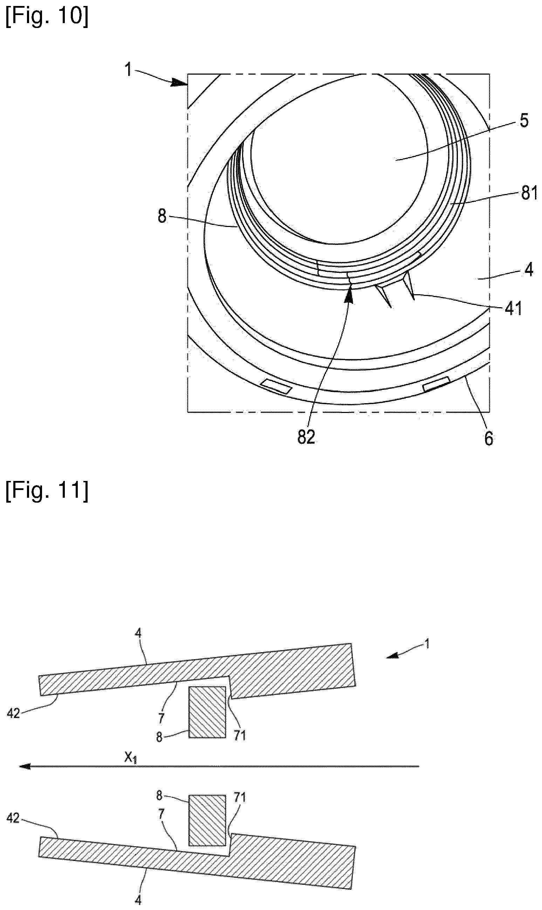

La figure 9 représente l'insertion de la bague fileté 8 illustrée sur la figure 7 dans le logement 7 illustré sur la figure 8. La bague filetée 8 est déformée grâce à ses propriétés de déformation élastique notamment conférées par la zone d'interruption 82. Ainsi, la bague filetée est facilement insérable dans le logement 7 du corps principal 2 afin de former le protecteur 1 qui est présenté sur la figure 10. Sur la figure 10, la bague filetée est parfaitement intégrée dans le logement 7. En outre, l'encoche 41 permet de faciliter le dégagement de la bague 8 notamment pour la remplacer.

La figure 11 illustre un protecteur comprenant une paroi latérale périphérique 4 de forme tronconique qui permet de bloquer un mouvement de rotation de la bague filetée 8 lors du vissage du composant tubulaire. La paroi latérale périphérique 4 comporte une portion tronconique qui est convergente en direction de la paroi de fond. La portion tronconique représentée dans la figure 11 permet de solidariser par friction la surface extérieure non filetée de la bague filetée 8 avec la surface intérieure 42 de la paroi latérale périphérique 4 lorsqu'une force de poussée axiale est exercée par le composant tubulaire (non représenté) sur la bague filetée selon la direction X₁, c'est-à-dire que la bague filetée 8 est déplacée depuis le rebord supérieur 71 du logement 7 en direction de la paroi de fond.

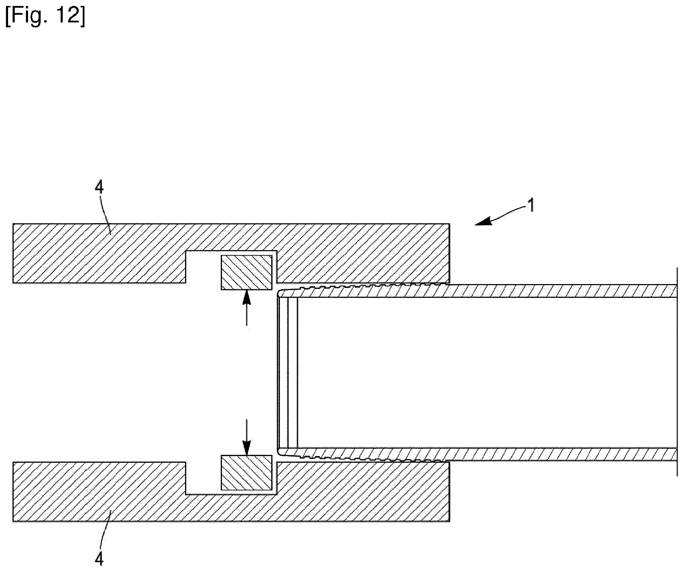

La figure 12 illustre un protecteur qui permet aussi de bloquer par friction un mouvement de rotation de la bague filetée 8 lors du vissage du composant tubulaire. L'épaisseur de la bague filetée 8 est supérieure à la profondeur du logement 7 de sorte que la bague filetée 8 est légèrement saillante. Le composant tubulaire 10 présente un diamètre légèrement supérieur au diamètre initial de la bague filetée 8. Lorsque le composant tubulaire 10 pénètre dans le protecteur 1 en exerçant une force de poussée axiale selon la direction X₁, la bague filetée 8 va buter sur le rebord inférieur 72 du logement 7, la friction exercée par la bague filetée 8 sur le rebord inférieur 72 va permettre d'initier le vissage du protecteur 1 sur l'extrémité fileté mâle 11 composant tubulaire 10. Durant le vissage du protecteur 1, une force radiale vers l'extérieur représentée par Y₁ et Y₂ est alors exercée sur la bague filetée entraînant une dilatation radiale de la bague filetée 8. Ainsi, la surface non filetée de la bague filetée 8 est plaquée contre la surface intérieure 42 de la paroi latérale périphérique 4 engendrant un blocage par friction contre la paroi latérale périphérique 4 de la bague filetée 8 en rotation. Ainsi, Le protecteur 1 peut être aisément vissé sur l'extrémité fileté mâle 11.

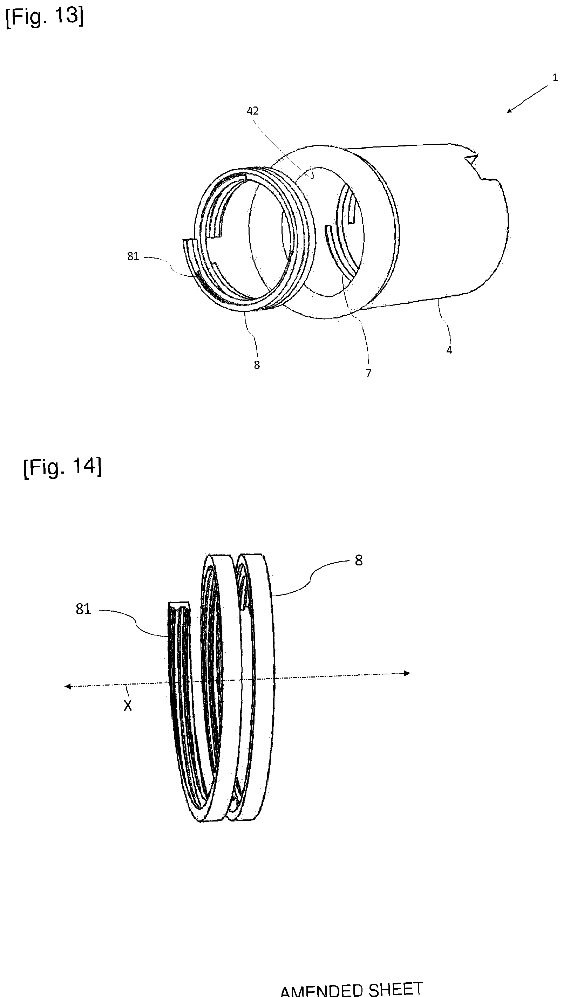

La figure 13 illustre un protecteur 1 selon un autre mode de réalisation comprenant un logement 7 et une bague filetée 8. La bague filetée 8 est visible en perspective sur la figure 14. La bague filetée 8 est de forme hélicoïdale et comprend deux tours distants l'un de l'autre autour d'un même axe X. La bague filetée 8 est interrompue, c'est-à-dire que les deux extrémités de la bague filetée 8 ne se rejoignent pas. De manière complémentaire, le logement 7 est creusé dans l'épaisseur de la paroi interne 42 de la paroi latérale périphérique 4 et présente une forme correspondante à l'hélicoïde de la bague filetée 8. Ainsi, la bague filetée pourra être insérée et maintenue dans le logement 7 afin de permettre le vissage d'une extrémité fileté mâle d'un composant tubulaire.

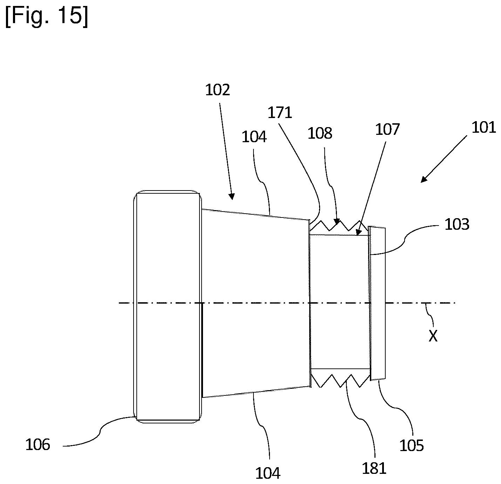

Les figures 15 à 17 représentent un protecteur 101 pour protéger un composant tubulaire 110 présentant une extrémité filetée femelle, c'est-à-dire présentant un filetage interne. Les éléments analogues ou identiques à ceux des figures précédentes portent un chiffre de référence augmenté de 100 par rapport aux figures précédentes.

La figure 15 illustre un protecteur 101 comprenant un corps principal 102 destiné à être inséré dans la portion d'extrémité filetée femelle. Le corps principal 102 comprend une paroi de fond 103 et une paroi latérale périphérique 104 s'étendant depuis la paroi de fond 103 dans une direction axiale X tout autour de la paroi de fond 103. La paroi latérale périphérique 104 présente une extrémité supérieure distante de la paroi de fond 103.

Un joint inférieur 105 est situé sur la paroi de fond 103 et est destiné à établir un contact étanche avec une surface interne de l'extrémité filetée femelle.

Un joint supérieur 106 est situé sur l'extrémité supérieure et est destiné à établir un contact étanche avec une surface externe de l'extrémité filetée femelle.

Une surface extérieure de la paroi latérale périphérique 4 du corps principal 2 présente un logement 107 situé entre le joint inférieur 105 et le joint supérieur 106.

Le logement 107 est ménagé dans une épaisseur de la surface extérieure de la paroi latérale périphérique 104 et s'étend autour de la paroi latérale périphérique 104. Le logement 107 est destiné à recevoir une bague filetée 108. Le logement 107 présente un rebord supérieur 171 destiné à arrêter la bague filetée 108 dans la direction axiale X, en direction du joint supérieur 106 et un rebord inférieur 172 destiné à arrêter la bague dans la direction axiale X, en direction du fond 103.

Une bague filetée 108 est logée dans ledit logement 107 de manière amovible, la bague filetée 108 présente un filetage 181 sur une surface extérieure de la paroi latérale périphérique 104 afin de permettre le vissage du protecteur 100 sur l'extrémité filetée femelle, c'est-à-dire sur un filetage interne.

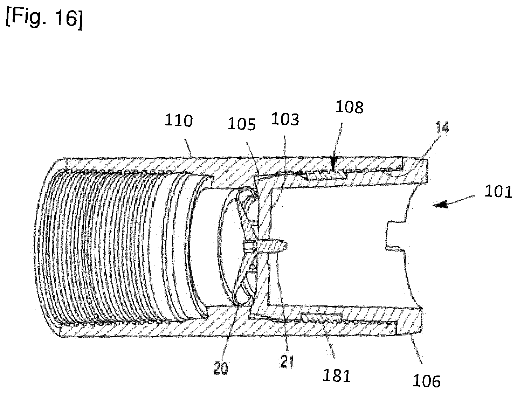

La figure 16 illustre un composant tubulaire 110 et un protecteur 100 correspondant vissé sur ledit composant tubulaire 110. La paroi de fond 103 et le joint inférieur 105 présentent un orifice traversant 131 qui est destiné à recevoir un tenon 21 d'un bouchon intérieur 20. Le composant tubulaire 110 présente une extrémité filetée femelle, c'est-à-dire présentant un filetage interne 14. Le joint inférieur 105 établi un contact étanche avec une surface interne de l'extrémité filetée femelle et le joint extérieur 106 établi un contact étanche avec une surface externe de l'extrémité filetée femelle.

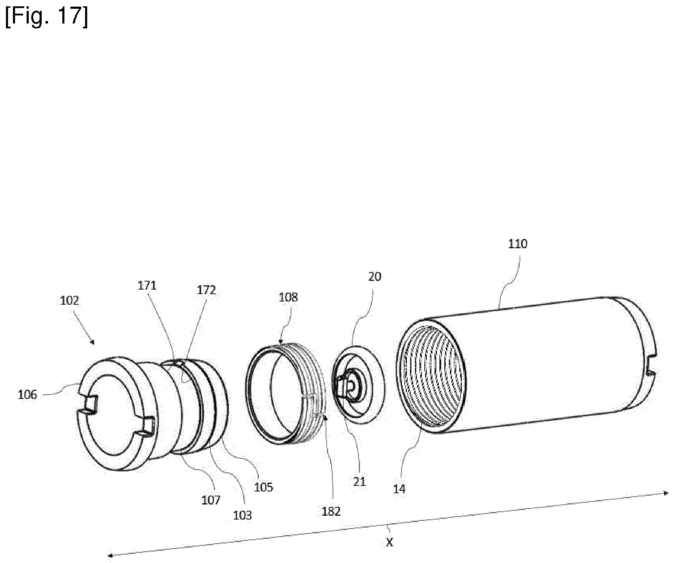

La figure 17 présente une vue éclatée du protecteur 101 représenté sur les figures 16 et 17.

Le composant tubulaire 110 est de forme générale cylindrique et présente une extrémité filetée femelle, c'est-à-dire présentant un filetage interne 14.

La bague filetée 108 est interrompue afin de former une zone d'interruption 182 en forme d'escalier de manière similaire à la figure 7 pour pouvoir être déformée lors d'une insertion dans le logement 107 ou d'un retrait dudit logement 107.

Le logement 107 présente un rebord supérieur 171 destiné à arrêter la bague dans la direction axiale, en direction du joint supérieur 106 et un rebord inférieur 172 destiné à arrêter la bague filetée 8 dans la direction axiale X, en direction du fond 103.

L'ensemble des variantes de bagues filetées 8 présentées précédemment pour le protecteur pour protéger une extrémité filetée mâle sont adaptables pour le protecteur pour protéger l'extrémité femelle 14 en inversant la surface filetée avec la surface non filetée.

Selon une variante de réalisation non représentée du protecteur pour protéger une extrémité filetée mâle ou femelle, le logement est aménagé dans toute épaisseur de la paroi latérale périphérique, c'est-à-dire que le logement traverse toute l'épaisseur de la paroi latérale périphérique et s'étend sur une première portion du tour de la paroi latérale périphérique. La bague filetée logée dans le logement est maintenue dans ce logement via une colonne de tubes de cuvelage située au moins autour du protecteur. La bague filetée comprend en outre une rainure qui coopère avec une nervure formée par une deuxième portion du tour de la paroi latérale périphérique qui ne comprend pas le logement. Ainsi, la bague filetée est maintenue radialement dans le logement, c'est-à-dire que le mouvement de la bague filetée est bloqué en rotation.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Protecteur pour protéger une extrémité filetée mâle (11) ou femelle d'un composant tubulaire (10, 110) pour le forage, l'exploitation des puits hydrocarbures, le transport de pétrole et de gaz, le transport ou le stockage d'hydrogène, la captation carbone ou la géothermie, l'extrémité filetée mâle (11) ou femelle étant munie d'au moins un filetage externe ou interne (14) , le protecteur (1, 101) comprenant :
- un corps principal (2, 102) destiné à recevoir l'extrémité filetée mâle (11) ou femelle, le corps principal (2, 102) comprenant une paroi latérale périphérique (4, 104) s'étendant selon une direction axiale (X), dans lequel un logement (7, 107) est aménagé dans une épaisseur de la paroi latérale périphérique (4, 104), ledit logement s'étendant autour de la paroi latérale périphérique (4, 104),
- au moins une bague filetée (8, 108) logée dans ledit logement (7, 107) de manière amovible, la bague filetée (8, 108) présentant un filetage (81) destinée à se visser sur le filetage externe ou interne (14) de l'extrémité filetée mâle (11) ou femelle, la bague filetée (8, 108) étant est interrompue, ladite bague filetée présentant une première extrémité et une deuxième extrémité, la première extrémité formant un premier bord latéral (83) et la deuxième extrémité formant un deuxième bord latéral (84), **caractérisé en ce que** le premier bord latéral (83) et le deuxième bord latéral (84) sont espacés l'un de l'autre par une zone d'interruption (82, 182),pour pouvoir être déformée lors d'une insertion dans le logement (7, 107) ou d'un retrait dudit logement (7, 107).

2. Protecteur selon l'une des revendications 1, dans lequel la bague filetée (8, 108) présente une zone d'épaisseur affaiblie (85) afin d'accroitre une capacité de déformation élastique de ladite bague filetée (8, 108).

3. Protecteur selon l'une des revendications 1 à 2, dans lequel une forme de la bague filetée (8, 108) et une forme correspondante du logement (7, 107) sont choisies parmi : une forme cylindrique, une forme cylindrique étagée, une forme hélicoïdale et une forme tronconique.

4. Protecteur selon l'une des revendications 1 à 3, dans lequel le logement (7, 107) présente au moins un rebord (71, 72, 171, 172) destiné à arrêter la bague filetée (8, 108) dans la direction axiale (X).

5. Protecteur selon la revendication 4, dans lequel le rebord (71, 72, 171, 172) présente une encoche (41) destinée à faciliter un démontage de la bague filetée (8, 108) du corps principal (2, 102).

6. Protecteur selon l'une des revendications 1 à 5, dans lequel un moyen de blocage bloque un mouvement de rotation de la bague filetée (8, 108) par rapport au corps principal (2, 102) pour pouvoir visser ou dévisser la bague filetée (8, 108) en exerçant un couple de rotation sur le corps principal (2, 102).

7. Protecteur selon la revendication 6, dans lequel le moyen de blocage comporte un système nervure-rainure permettant de solidariser en rotation une surface extérieure ou intérieure de la bague filetée (8, 108) avec une surface intérieure ou extérieure (42) de la paroi latérale périphérique (4, 104).

8. Protecteur selon la revendication 7, dans lequel la bague filetée (8, 108) comprend une zone d'interruption (82, 182), ladite zone d'interruption (82, 182) formant ladite rainure, et dans lequel la zone d'interruption (82, 182) coopère avec une nervure (9) formée sur la surface intérieure (42) ou extérieure de la paroi latérale périphérique (4, 104).

9. Protecteur selon l'une des revendications 7 à 8, dans lequel le système nervure-rainure comprend une rainure (88) formée dans une surface non filetée de la bague filetée (8, 108) et une nervure (9) située dans le logement (7, 107) et destinée à être logée dans ladite rainure (88).

10. Protecteur selon l'une des revendications 7 à 9, dans lequel le moyen de blocage est choisi parmi :
- une portion tronconique formée par une surface non filetée de la bague filetée (8, 108) et/ou par une surface intérieure (42) ou extérieure de la paroi latérale périphérique (4, 104), la portion tronconique permettant de solidariser par friction la surface non filetée de la bague filetée (8, 108) avec la surface intérieure (42) ou la surface extérieure de la paroi latérale périphérique (4, 104) en réponse à une force de poussée axiale exercée sur la bague filetée (8, 108) en direction de la paroi de fond,
- une épaisseur de la bague filetée (8, 108) supérieure à une profondeur du logement (7, 107) afin de solidariser par friction la surface non filetée de la bague filetée (8, 108) avec la surface intérieure (42) ou extérieure de la paroi latérale périphérique (4, 104) en vissant le filetage externe ou interne (14) de l'extrémité filetée mâle (11) ou femelle du composant tubulaire (10, 110) à la bague filetée (8, 108), l'extrémité filetée mâle (11) ou femelle du composant tubulaire (10, 110) étant apte à provoquer une dilatation radiale de la bague filetée (8, 108) en réponse audit vissage.

11. Protecteur selon l'une des revendications 1 à 10, dans lequel la bague filetée (8, 108) et/ou le corps principal (2, 102) est fabriqué par fabrication additive, par moulage ou par usinage dans un ou plusieurs matériaux.

12. Protecteur selon l'une des revendications 1 à 11, dans lequel le corps principal (2, 102) présente une paroi de fond (3, 103) qui est située au niveau d'une extrémité axiale de la paroi latérale périphérique (4, 104), la paroi latérale périphérique (4, 104) s'étendant tout autour de la paroi de fond (3, 103).

13. Protecteur selon la revendication 12, dans lequel un joint inférieur (5, 105) est situé sur la paroi de fond (3, 103) et est destiné à établir un contact étanche avec l'extrémité filetée mâle (11) ou femelle du composant tubulaire (10, 110).

14. Protecteur selon l'une des revendications 12 à 13, dans lequel la paroi latérale périphérique (4, 104) présente une extrémité axiale distante de la paroi de fond (3, 103), un joint supérieur (6, 106) étant situé sur l'extrémité axiale et destiné à établir un contact étanche avec l'extrémité filetée mâle (11) ou femelle du composant tubulaire (10, 110).

15. Ensemble comportant un composant tubulaire présentant une extrémité filetée mâle (11) ou femelle et un protecteur (1, 101) selon l'une des revendications 1 à 14 fixé par vissage à l'extrémité filetée (11) mâle ou femelle.

## Patentansprüche

1. Schutzvorrichtung zum Schützen eines Außen- (11) oder Innengewindeendes einer rohrförmigen Komponente (10, 110) für das Bohren, den Betrieb von Kohlenwasserstoffbohrlöchern, den Transport von Erdöl und von Gas, den Transport oder die Speicherung von Wasserstoff, die CO2-Abscheidung und -Speicherung oder die Geothermie, wobei das Außen- (11) oder Innengewindeende mit mindestens einem Außen- oder Innengewinde (14) versehen ist, wobei die Schutzvorrichtung (1, 101) umfasst:
- einen Hauptkörper (2, 102), der dazu bestimmt ist, das Außen- (11) oder Innengewindeende aufzunehmen, wobei der Hauptkörper (2, 102) eine umlaufende Seitenwand (4, 104) umfasst, die sich in einer axialen Richtung (X) erstreckt, wobei eine Aufnahme (7, 107) in einer Dicke der umlaufenden Seitenwand (4, 104) ausgebildet ist, wobei sich die Aufnahme um die umlaufende Seitenwand (4, 104) herum erstreckt;
- mindestens einen Gewindering (8, 108), der in der Aufnahme (7, 107) lösbar aufgenommen ist, wobei der Gewindering (8, 108) ein Gewinde (81) aufweist, das dazu bestimmt ist, auf das Außen- oder Innengewinde (14) des Außen- (11) oder Innengewindeendes geschraubt zu werden, wobei der Gewindering (8, 108) unterbrochen ist, wobei der Gewindering ein erstes Ende und ein zweites Ende aufweist, wobei das erste Ende einen ersten Seitenrand (83) bildet und das zweite Ende einen zweiten Seitenrand (84) bildet, **dadurch gekennzeichnet, dass** der erste Seitenrand (83) und der zweite Seitenrand (84) durch einen Unterbrechungsbereich (82, 182) voneinander beabstandet sind, um bei einem Einsetzen in die Aufnahme (7, 107) oder bei einem Zurückziehen aus der Aufnahme (7, 107) verformt werden zu können.

2. Schutzvorrichtung nach Anspruch 1, wobei der Gewindering (8, 108) einen Bereich verminderter Dicke (85) aufweist, um eine Fähigkeit des Gewinderinges (8, 108) zur elastischen Verformung zu erhöhen.

3. Schutzvorrichtung nach einem der Ansprüche 1 bis 2, wobei eine Form des Gewinderinges (8, 108) und eine entsprechende Form der Aufnahme (7, 107) ausgewählt sind aus: einer zylindrischen Form, einer abgestuften zylindrischen Form, einer schraubenförmigen Form und einer Kegelstumpfform.

4. Schutzvorrichtung nach einem der Ansprüche 1 bis 3, wobei die Aufnahme (7, 107) mindestens eine Randleiste (71, 72, 171, 172) aufweist, die dazu bestimmt ist, den Gewindering (8, 108) in der axialen Richtung (X) zu arretieren.

5. Schutzvorrichtung nach Anspruch 4, wobei die Randleiste (71, 72, 171, 172) einen Einschnitt (41) aufweist, der dazu bestimmt ist, ein Abmontieren des Gewinderinges (8, 108) vom Hauptkörper (2, 102) zu erleichtern.

6. Schutzvorrichtung nach einem der Ansprüche 1 bis 5, wobei ein Blockiermittel eine Drehbewegung des Gewinderinges (8, 108) bezüglich des Hauptkörpers (2, 102) blockiert, um den Gewindering (8, 108) durch Ausüben eines Drehmoments auf den Hauptkörper (2, 102) anschrauben oder abschrauben zu können.

7. Schutzvorrichtung nach Anspruch 6, wobei das Blockiermittel ein Rippe-Nut-System aufweist, welches ermöglicht, eine Außen- oder Innenfläche des Gewinderinges (8, 108) mit einer Innen- oder Außenfläche (42) der umlaufenden Seitenwand (4, 104) drehfest zu verbinden.

8. Schutzvorrichtung nach Anspruch 7, wobei der Gewindering (8, 108) einen Unterbrechungsbereich (82, 182) umfasst, wobei der Unterbrechungsbereich (82, 182) die Nut bildet und wobei der Unterbrechungsbereich (82, 182) mit einer Rippe (9) zusammenwirkt, die auf der Innen- (42) oder Außenfläche der umlaufenden Seitenwand (4, 104) ausgebildet ist.

9. Schutzvorrichtung nach einem der Ansprüche 7 bis 8, wobei das Rippe-Nut-System eine Nut (88), die in einer nicht mit einem Gewinde versehenen Fläche des Gewinderinges (8, 108) ausgebildet ist, und eine Rippe (9), die sich in der Aufnahme (7, 107) befindet und dazu bestimmt ist, in der Nut (88) aufgenommen zu werden, umfasst.

10. Schutzvorrichtung nach einem der Ansprüche 7 bis 9, wobei das Blockiermittel ausgewählt ist aus:
- einem kegelstumpfförmigen Abschnitt, der von einer nicht mit einem Gewinde versehenen Fläche des Gewinderinges (8, 108) und/oder von einer Innen- (42) oder Außenfläche der umlaufenden Seitenwand (4, 104) gebildet wird, wobei der kegelstumpfförmige Abschnitt ermöglicht, die nicht mit einem Gewinde versehene Fläche des Gewinderinges (8, 108) mit der Innenfläche (42) oder der Außenfläche der umlaufenden Seitenwand (4, 104) in Reaktion auf eine axiale Schubkraft, die auf den Gewindering (8, 108) in Richtung der Bodenwand ausgeübt wird, reibschlüssig zu verbinden,
- einer Dicke des Gewinderinges (8, 108), die größer als eine Tiefe der Aufnahme (7, 107) ist, um die nicht mit einem Gewinde versehene Fläche des Gewinderinges (8, 108) mit der Innen- (42) oder Außenfläche der umlaufenden Seitenwand (4, 104) reibschlüssig zu verbinden, indem das Außen- oder Innengewinde (14) des Außen- (11) oder Innengewindeendes der rohrförmigen Komponente (10, 110) an den Gewindering (8, 108) angeschraubt wird, wobei das Außen- (11) oder Innengewindeendes der rohrförmigen Komponente (10, 110) geeignet ist, in Reaktion auf diesen Schraubvorgang eine radiale Dehnung des Gewinderinges (8, 108) hervorzurufen.

11. Schutzvorrichtung nach einem der Ansprüche 1 bis 10, wobei der Gewindering (8, 108) und/oder der Hauptkörper (2, 102) durch additive Fertigung, durch Formen oder durch spanabhebende Bearbeitung aus einem oder mehreren Werkstoffen hergestellt sind.

12. Schutzvorrichtung nach einem der Ansprüche 1 bis 11, wobei der Hauptkörper (2, 102) eine Bodenwand (3, 103) aufweist, die sich an einem axialen Ende der umlaufenden Seitenwand (4, 104) befindet, wobei sich die umlaufende Seitenwand (4, 104) vollständig um die Bodenwand (3, 103) herum erstreckt.

13. Schutzvorrichtung nach Anspruch 12, wobei sich eine untere Dichtung (5, 105) auf der Bodenwand (3, 103) befindet und dazu bestimmt ist, einen dichten Kontakt mit dem Außen- (11) oder Innengewindeende der rohrförmigen Komponente (10, 110) herzustellen.

14. Schutzvorrichtung nach einem der Ansprüche 12 bis 13, wobei die umlaufende Seitenwand (4, 104) ein von der Bodenwand (3, 103) entferntes axiales Ende aufweist, wobei sich eine obere Dichtung (6, 106) an dem axialen Ende befindet und dazu bestimmt ist, einen dichten Kontakt mit dem Außen- (11) oder Innengewindeende der rohrförmigen Komponente (10, 110) herzustellen.

15. Anordnung, welche eine rohrförmige Komponente, die ein Außen- (11) oder Innengewindeende aufweist, und eine Schutzvorrichtung (1, 101) nach einem der Ansprüche 1 bis 14, die durch Anschrauben an dem Außen- (11) oder Innengewindeende befestigt ist, umfasst.

## Claims

1. Protector for protecting a male (11) or female threaded end of a tubular component (10, 110) for drilling, for the exploitation of hydrocarbon wells, for transporting oil and gas, for transporting or storing hydrogen, for capturing carbon or geothermal energy, the male (11) or female threaded end being provided with at least one external or internal thread (14), the protector (1, 101) comprising:
- a main body (2, 102) that is intended to receive the male (11) or female threaded end, the main body (2, 102) comprising a peripheral side wall (4, 104) extending in an axial direction (X), wherein a housing (7, 107) is provided in a thickness of the peripheral side wall (4, 104), said housing extending around the peripheral side wall (4, 104);
- at least one threaded ring (8, 108) detachably housed in said housing (7, 107), the threaded ring (8, 108) having a thread (81) that is intended to be screwed onto the external or internal thread (14) of the male (11) or female threaded end,
**characterized in that** the threaded ring (8, 108) is discontinuous, said threaded ring having a first end and a second end, the first end forming a first side edge (83) and the second end forming a second side edge (84), the first side edge (83) and the second side edge (84) being spaced apart from one another by a discontinuous area (82, 182), in order to be able to be deformed when inserted into the housing (7, 107) or removed from said housing (7, 107).

2. Protector according to Claim 1, wherein the threaded ring (8, 108) has a weakened thickness area (85) in order to increase the resilient deformability of said threaded ring (8, 108).

3. Protector according to either one of Claims 1 and 2, wherein a shape of the threaded ring (8, 108) and a corresponding shape of the housing (7, 107) are selected from among: a cylindrical shape, a stepped cylindrical shape, a helical shape and a frustoconical shape.

4. Protector according to any of Claims 1 to 3, wherein the housing (7, 107) has at least one flange (71, 72, 171, 172) intended to stop the threaded ring (8, 108) in the axial direction (X).

5. Protector according to Claim 4, wherein the flange (71, 72, 171, 172) has a notch (41) intended to facilitate the removal of the threaded ring (8, 108) from the main body (2, 102).

6. Protector according to any of Claims 1 to 5, wherein a blocking means blocks a rotational movement of the threaded ring (8, 108) relative to the main body (2, 102) in order to be able to screw or unscrew the threaded ring (8, 108) by exerting a rotational torque on the main body (2, 102).

7. Protector according to Claim 6, wherein the blocking means comprises a rib-groove system for rotationally securing an external or internal surface of the threaded ring (8, 108) to an internal or external surface (42) of the peripheral side wall (4, 104).

8. Protector according to Claim 7, wherein the threaded ring (8, 108) comprises a discontinuous area (82, 182), said discontinuous area (82, 182) forming said groove, and wherein the discontinuous area (82, 182) engages with a rib (9) formed on the internal (42) or external surface of the peripheral side wall (4, 104).

9. Protector according to any of Claims 7 to 8, wherein the rib-groove system comprises a groove (88) formed in a non-threaded surface of the threaded ring (8, 108) and a rib (9) located in the housing (7, 107) and intended to be housed in said groove (88).

10. Protector according to any of Claims 7 to 9, wherein the blocking means is selected from among:
- a frustoconical portion formed by a non-threaded surface of the threaded ring (8, 108) and/or by an internal (42) or external surface of the peripheral side wall (4, 104), the frustoconical portion allowing the non-threaded surface of the threaded ring (8, 108) to be frictionally secured to the internal surface (42) or to the external surface of the peripheral side wall (4, 104) in response to an axial thrust force exerted on the threaded ring (8, 108) towards the bottom wall;
- a thickness of the threaded ring (8, 108) that is greater than a depth of the housing (7, 107) in order to frictionally secure the non-threaded surface of the threaded ring (8, 108) to the internal (42) or external surface of the peripheral side wall (4, 104) by screwing the external or internal thread (14) of the male (11) or female threaded end of the tubular component (10, 110) to the threaded ring (8, 108), with the male (11) or female threaded end of the tubular component (10, 110) being adapted to cause radial expansion of the threaded ring (8, 108) in response to said screwing.

11. Protector according to any of Claims 1 to 10, wherein the threaded ring (8, 108) and/or the main body (2, 102) is/are manufactured by additive manufacturing, by casting or by machining from one or more material(s).

12. Protector according to any of Claims 1 to 11, wherein the main body (2, 102) has a bottom wall (3, 103) that is located at an axial end of the peripheral side wall (4, 104), with the peripheral side wall (4, 104) completely extending around the bottom wall (3, 103).

13. Protector according to Claim 12, wherein a lower seal (5, 105) is located on the bottom wall (3, 103) and is intended to establish a sealed contact with the male (11) or female threaded end of the tubular component (10, 110).

14. Protector according to any of Claims 12 to 13, wherein the peripheral side wall (4, 104) has an axial end remote from the bottom wall (3, 103), with an upper seal (6, 106) being located on the axial end and being intended to establish a sealed contact with the male (11) or female threaded end of the tubular component (10, 110).

15. Assembly comprising a tubular component having a male (11) or female threaded end and a protector (1, 101) according to any of Claims 1 to 14 attached to the male (11) or female threaded end by screwing.
